# FASCICULE DE BREVET EUROPEEN

(11) **EP 2 474 359 B1**
(45) Date de publication et mention de la délivrance du brevet: **20.03.2019**
(21) Numéro de dépôt: 12150493.0
(22) Date de dépôt: 09.01.2012
(51) Int. Cl.: B01J 38/00, B01J 38/02, B01J 23/94, B01J 23/882, B01J 23/883, B01J 29/90, B01J 23/90

(54) **PROCÉDÉ DE RÉGÉNÉRATION HORS SITE DE CATALYSEURS SOLIDES**
Ex-situ Regeneration von festen Katalysatoren.
Off-site regeneration of solid catalysts.

(30) Priorité: 11.01.2011 FR 1150198; 07.02.2011 US 201161440218 P
(43) Date de publication de la demande: 11.07.2012
(73) Titulaire: Eurecat S.A., 07800 La Voulte-sur-Rhône (FR)
(72) Inventeur: Kerleau, Philippe, 26000 Valence (FR); Dufresne, Pierre, 26000 VALENCE (FR)
(74) Mandataire: Martin-Charbonneau, Virginie

(56) Documents cités:
- EP-A2- 0 818 240
- WO-A1-01/66214
- WO-A1-03/064356
- WO-A2-03/064034
- WO-A2-2009/090413
- DE-A1- 2 853 065
- JP-A- 2000 093 805
- US-A- 5 047 377
- US-A1- 2008 038 159
- US-A1- 2009 038 441

## Description

La présente invention concerne un procédé pour régénérer des catalyseurs usés destinés au traitement d'hydrocarbures dans le domaine notamment du raffinage pétrolier et de la pétrochimie.

La présente demande concerne plus précisément un procédé destiné à régénérer des catalyseurs usés employés dans les procédés de conversion d'hydrocarbures, afin de leur restituer un niveau d'activité satisfaisant, au moins approchant de celui d'un catalyseur neuf.

Les procédés de traitement des hydrocarbures effectués dans les raffineries et/ou les unités de pétrochimie font appel à des catalyseurs spécifiques, qui sont des solides poreux de surface spécifique élevée (typiquement, de 50 à 500 m² / g) et de volume poreux important (de 0,1 à 0,7 litres / kg).

Les catalyseurs les plus couramment employés comprennent un support poreux à base d'un ou plusieurs oxydes inorganiques réfractaires, sur lequel sont déposés un ou plusieurs métaux catalytiquement actifs, comprenant le plus souvent un ou plusieurs métaux du groupe VIII de la classification périodique des éléments, parfois associé(s) à un ou plusieurs autres métaux, notamment du groupe VIB. De tels catalyseurs sont employés en particulier dans les procédés d'hydrocraquage, de réformage, d'hydrogénation, et les procédés dits d'hydrotraitement tels que les procédés d'hydrodésulfuration, d'hydrodéazotation, d'hydrodéaromatisation, d'hydrodémétallation.

Sont également employés, par exemple dans les procédés d'alkylation et de polymérisation, des catalyseurs à base de zéolithes.

Au cours de leur utilisation, ces catalyseurs se désactivent progressivement, notamment du fait du dépôt à leur surface de coke, c'est-à-dire d'un mélange comprenant des hydrocarbures plus ou moins lourds, des résidus de carbone, et parfois des impuretés métalliques. Ces dépôts de coke réduisent la porosité du catalyseur, bloquent l'accès aux sites catalytiquement actifs, et désactivent ces derniers.

Dans un souci d'économie et de préservation de l'environnement, on cherche désormais à réutiliser ces catalyseurs après leur cycle d'utilisation.

Ont ainsi été mis au point des procédés dits de régénération, qui consistent à traiter les catalyseurs usés afin de restaurer leur activité à un niveau suffisant pour permettre leur réemploi.

La régénération des catalyseurs usés est traditionnellement effectuée par combustion du coke, en chauffant le catalyseur à une température élevée en présence d'un gaz contenant de l'oxygène. Elle peut être réalisée in situ (c'est-à-dire, directement dans l'unité dans laquelle le catalyseur est employé, après arrêt de celle-ci), ou ex situ c'est à dire hors site, après déchargement du catalyseur hors de l'unité.

Avant d'effectuer la combustion du coke, il est usuel de procéder à une première étape d'élimination des hydrocarbures et impuretés les plus volatiles (ou "hydrocarbures libres") présents à la surface du catalyseur.

En effet, il est préférable de ne pas soumettre le catalyseur usé directement à des conditions de température élevées en milieu oxygéné, car la combustion des hydrocarbures libres dans de telles conditions s'avère difficile à contrôler, et peut déclencher des phénomènes d'inflammations, d'explosions qui, outre leur caractère dangereux, sont susceptibles d'endommager le catalyseur.

Les deux techniques connues à cet effet consistent d'une part en une évaporation des hydrocarbures, et d'autre part en un lavage du catalyseur au moyen d'un solvant liquide.

L'évaporation des hydrocarbures est réalisée en chauffant le catalyseur en présence d'un gaz vecteur, à une température adaptée aux types d'hydrocarbures à éliminer. Le plus souvent, les températures d'ébullition de ces produits se situent dans les gammes naphta (80-150°C), kérosène (150-250°C) ou gasoil atmosphérique (250-380°C). La température d'évaporation doit donc être adaptée aux types d'hydrocarbures à éliminer. Elle est comprise en général entre 100 et 500°C.

Le gaz vecteur peut être un gaz inerte, de l'azote, ou de l'air appauvri en oxygène, voire, dans certains cas, de l'air à température modérée.

Les hydrocarbures évaporés doivent être ensuite éliminés du gaz vecteur, ce qui peut s'effectuer dans un incinérateur fonctionnant à des températures voisines de 800°C.

Cette technologie est simple et efficace. Elle souffre néanmoins d'un mauvais bilan énergétique, et donne lieu à des émissions non négligeables de CO₂. En effet, un premier poste d'émission provient de la combustion du gaz nécessaire pour chauffer le catalyseur jusqu'à la température d'évaporation des hydrocarbures. De plus, un apport substantiel d'énergie est nécessaire pour l'évaporation de ces hydrocarbures, la chaleur latente d'évaporation étant non négligeable dans le bilan global. Puis ceux-ci sont brûlés dans un incinérateur, ce qui occasionne une autre dépense énergétique pour porter ces effluents à une température proche de 800°C, même si la combustion de ces hydrocarbures contribue à l'élévation de température. Cet incinérateur engendre également une production additionnelle de CO₂, due au brûleur à gaz ainsi qu'à la combustion même des hydrocarbures.

Un deuxième inconvénient des technologies d'évaporation des hydrocarbures sous gaz inerte, est qu'elles engendrent une production additionnelle de coke à la surface du catalyseur, liée essentiellement à deux phénomènes.

Un premier phénomène est dû au fait que la sélectivité de l'évaporation n'est pas totale. A haute température sous gaz inerte, se produit une transformation partielle des hydrocarbures. Cette réaction chimique, dite de dismutation (en anglais "disproportionation"), conduit à la fois à une production de molécules plus légères et plus lourdes que les molécules contenues initialement. Sous l'effet de la chaleur, certaines molécules se craquent par un processus de cracking thermique, produisant des hydrocarbures légers. Quant aux réactions qui contribuent à l'augmentation du poids moléculaire, ce sont des réactions d'alkylation, en particulier avec les fragments oléfiniques craqués, et des réactions de condensation. Il y a non seulement une augmentation du poids moléculaire de certains hydrocarbures, mais également un changement partiel de nature avec une aromatisation plus poussée.

Le deuxième phénomène est la modification substantielle de la nature du carbone (coke) déjà présent sur le catalyseur: ces molécules carbonées sont susceptibles de se modifier lors du chauffage, et subir entre autres un craquage partiel et une aromatisation.

Ces deux phénomènes concourent à augmenter la proportion de coke dit "dur", ce qui rend plus difficile la combustion du coke, en diminuant la cinétique de combustion. A l'échelle du laboratoire, cet effet est caractérisable par un test de cinétique de combustion.

Il apparaît ainsi que les techniques d'évaporation des hydrocarbures contribuent à augmenter le temps d'élimination du carbone, à rendre celle ci plus coûteuse en termes notamment de dépense énergétique, avec un risque accru d'endommagement du catalyseur, qui doit être soumis à des conditions plus dures de combustion (température de combustion plus élevée et/ou durée plus importante de l'étape de combustion).

Une deuxième technique permettant d'éliminer les hydrocarbures libres avant la combustion du coke consiste à laver le catalyseur usé au moyen d'un ou plusieurs solvants liquides (technologies dites d'élimination au solvant des hydrocarbures). Le solvant contenant les hydrocarbures est ensuite évaporé, de manière à récupérer les hydrocarbures et recycler le solvant.

Cette technique présente l'intérêt de pouvoir récupérer les hydrocarbures pour éventuellement les valoriser. Les émissions de CO₂ sont ainsi largement réduites par rapport à une technique d'évaporation dans laquelle ces hydrocarbures sont incinérés.

Néanmoins, cette technologie est en pratique difficilement exploitable à l'échelle industrielle, notamment pour la régénération hors site de catalyseurs d'hydrotraitement. En effet, les solvants permettant à la fois de solubiliser les hydrocarbures présents, et d'être séparables de ces composés par distillation, sont typiquement des solvants organiques tels que l'acétone ou des solvants aromatiques (toluène, xylène) qui présentent des facteurs de risque en termes de sécurité et d'environnement. L'emploi de tels solvants rend la mise en oeuvre du procédé complexe, et en augmentent les coûts à la fois d'investissement et d'exploitation.

WO 03/064034 décrit un procédé de régénération de catalyseur comprenant dans l'une de ses variantes une étape d'élimination des hydrocarbures contenus dans le catalyseur usagé par lavage avec un fluide à l'état supercritique avant de procéder à la combustion du coke. Le fluide à l'état supercritique peut être par exemple le dioxyde de carbone, les paraffines légères et le cyclopentane.

La présente invention vise à remédier aux inconvénients des procédés de régénération de l'art antérieur, tels que décrits ci-avant.

La présente invention vise en particulier à proposer un procédé de régénération hors site de catalyseurs qui soit simple et efficace, tout en étant sûr en termes de sécurité et d'environnement.

La présente invention vise également à proposer un procédé de régénération qui permette de diminuer les consommations d'énergies, et réduire les émissions de CO₂ par rapport aux procédés connus.

Le procédé selon la présente invention doit enfin permettre de régénérer les catalyseurs de manière performante, afin de leur restituer un niveau d'activité aussi proche que possible de celui d'un catalyseur neuf, sans les endommager, et notamment sans réduire leur porosité.

Poursuivant ses recherches dans le domaine de la régénération des catalyseurs de traitement d'hydrocarbures, la Demanderesse a découvert que ces objectifs pouvaient être atteints au moyen d'un procédé de régénération hors site comprenant l'association de deux étapes consécutives, à savoir une première étape de lavage du catalyseur au moyen d'un fluide se trouvant à l'état supercritique, suivie d'une seconde étape de combustion du coke dans des conditions contrôlées.

Ainsi, la présente invention a pour objet un procédé de régénération hors site d'un catalyseur solide, comprenant les deux étapes consécutives suivantes :
- une première étape de lavage du catalyseur au moyen d'un ou plusieurs fluide(s) à l'état supercritique, de manière à extraire du catalyseur au moins une partie des hydrocarbures présents à la surface de celui-ci, suivie de
- une seconde étape de combustion d'au moins une partie du coke présent à la surface du catalyseur, par traitement thermique de celui-ci en présence d'oxygène et à une température allant de 300°C à 600°C,
caractérisé en ce que le fluide à l'état supercritique est choisi parmi l'eau et le dioxyde de carbone contenant de 1 à 15% en poids d'eau.

Le procédé selon l'invention comporte ainsi une première étape, dans laquelle le catalyseur est lavé, c'est à dire balayé, au moyen d'un fluide se trouvant à l'état supercritique, lequel permet d'extraire du catalyseur tout ou partie des hydrocarbures, et notamment les hydrocarbures libres présents à sa surface.

Par fluide à l'état supercritique, on désigne de manière connue en soi un fluide porté au delà de sa température critique, et de sa pression critique. Les propriétés d'un tel fluide (densité, viscosité, coefficient de diffusion...) sont intermédiaires entre celles des liquides et celles des gaz. Ceci permet notamment, pour un même fluide, de faire varier ses propriétés d'extraction en modifiant les conditions de température et/ou de pression, de manière à adapter ces propriétés en fonction de la nature et/ou de la quantité des hydrocarbures à extraire, et /ou faire évoluer ces propriétés au cours du temps.

Les conditions opératoires de la première étape dépendent de la nature du ou des fluide(s) supercritique(s) mis en oeuvre, et peuvent varier au cours du temps.

Lorsque le fluide à l'état supercritique est le dioxyde de carbone additionné d'une certaine proportion d'eau, la première étape est effectuée à une température supérieure ou égale à 31°C, et à une pression supérieure ou égale à 7,38 MPa (MégaPascal), soit 73,8.10⁵ Pa. De préférence, la température va de 35 à 250 °C, et plus préférentiellement de 50 à 100°C. De préférence, la pression va de 7,5 à 60 MPa (75.10⁵ Pa à 600.10⁵ Pa), et plus préférentiellement de 8 à 40 MPa (80.10⁵ Pa à 400.10⁵ Pa), et mieux encore de 8 à 20 MPa (80.10⁵ Pa à 200.10⁵ Pa).

L'addition d'une certaine proportion d'eau dans le dioxyde de carbone permet de modifier les propriétés de polarité du mélange solvant et donc d'en modifier les propriétés d'extraction.

Selon un mode de réalisation le fluide à l'état supercritique est du dioxyde de carbone, contenant de 1 à 15 % en poids d'eau.

Lorsque le fluide à l'état supercritique est l'eau à l'état pur, la première étape est effectuée à une température supérieure ou égale à 374°C, et à une pression supérieure ou égale à 22,1 MPa (221.10⁵ Pa).

La première étape est avantageusement effectuée en faisant circuler une quantité importante de fluide à l'état supercritique par rapport au solide à traiter, et en recyclant le fluide. Cette quantité peut s'exprimer comme le rapport du débit horaire pondéral du fluide à l'état supercritique par au poids de catalyseur, appelée PPH en français et WHSV en anglais ("Weight Hourly Space Velocity") et s'exprime en h⁻¹. Ce paramètre est avantageusement compris entre 10 et 3000 h⁻¹, et de préférence entre 100 et 1000 h⁻¹.

Le fluide à l'état supercritique peut être employé pur, ou en mélange avec un ou plusieurs co-solvant(s) et/ou additif(s), afin de faire varier son pouvoir d'extraction des hydrocarbures.

Les hydrocarbures extraits au moyen du fluide supercritique peuvent être séparés de celui-ci de manière simple, notamment en faisant varier la température et/ou la pression du fluide, de manière à provoquer le passage du fluide de l'état supercritique à l'état liquide ou gazeux.

Par exemple, lorsque le fluide à l'état supercritique est le dioxyde de carbone, en abaissant la température et/ou la pression au dessous de la température critique et/ou de la pression critique, l'on provoque le passage du dioxyde de carbone à l'état gazeux, et la condensation des hydrocarbures extraits.

Ainsi, les hydrocarbures extraits au cours de la première étape peuvent être séparés du fluide de manière simple et peu coûteuse, et récupérés par exemple afin d'être valorisés.

En outre, le fluide débarrassé des hydrocarbures est ainsi facilement récupéré, et est avantageusement recyclé, après passage à l'état supercritique, vers la première étape du procédé.

A l'issue de la première étape, le catalyseur a été débarrassé de manière efficace d'une fraction importante des hydrocarbures présents à sa surface, et est ensuite directement soumis à une étape de traitement thermique en présence d'oxygène, au cours de laquelle est effectuée la combustion du coke qui n'a pas été éliminé lors de la première étape.

Le contrôle strict de la température au sein du catalyseur est essentiel lors de cette seconde étape. La température doit en effet être suffisamment élevée pour permettre une combustion aussi complète que possible du coke. Cependant, elle ne doit pas dépasser 600°C, et ce même localement, car cela aurait pour effet d'endommager le catalyseur par exemple en dégradant la porosité de celui-ci.

De préférence, dans la seconde étape le traitement thermique est effectué, en totalité ou en partie, à une température allant de 350°C à 550°C.

La température au sein du catalyseur peut être contrôlée, de manière connue en soi, par exemple au moyen de thermocouples disposés de manière appropriée dans la masse du catalyseur.

La seconde étape est effectuée en présence d'oxygène, par exemple au moyen d'un flux de gaz contenant de l'oxygène. Ce gaz peut être constitué par exemple d'air, pur ou mélangé à de l'oxygène additionnel ou à un gaz inerte, en particulier l'azote, de manière à augmenter ou diminuer la pression partielle d'oxygène au-delà et en deçà de la valeur de 21 kPa.

La teneur en oxygène du gaz est de préférence contrôlée, de manière à mieux contrôler la température de combustion. Cette teneur peut être fixe, ou au contraire varier au cours du temps lors de la seconde étape.

Le débit de gaz est également contrôlé, de façon à contrôler la combustion.

La seconde étape peut comprendre plusieurs phases, effectuées à des températures différentes et/ou en présence de quantités variables d'oxygène.

La durée totale de cette seconde étape dépend généralement de la quantité de catalyseur à traiter, de la composition de celui-ci, de la quantité de coke présent à sa surface, et des conditions opératoires (température, teneur en oxygène). Cette durée est d'autant plus courte que la température est élevée. Elle est généralement comprise entre 0,05 et 20 heures, de préférence entre 0,1 et 10 heures.

La seconde étape est avantageusement poursuivie jusqu'à l'obtention d'une teneur en carbone du catalyseur inférieure ou égale à 2 % en poids, de préférence inférieure ou égale à 1 % en poids, et plus préférentiellement inférieure ou égale à 0,5% en poids, par rapport au poids total du catalyseur.

Selon l'invention, lesdites première et seconde étapes sont consécutives, c'est à dire que la seconde étape est réalisée immédiatement après la première étape, sans aucune étape intermédiaire de traitement du catalyseur. Ainsi, le procédé selon l'invention ne comprend notamment pas d'étape de séchage du catalyseur entre la première et la seconde étape. A noter qu'un éventuel stockage du catalyseur entre la première et la seconde étape n'est pas considéré comme une étape de traitement.

L'association des deux étapes selon l'invention s'est avérée particulièrement bénéfique. Ainsi, la première étape permet une élimination efficace des hydrocarbures présents à la surface du catalyseur, sans formation de coke additionnel ni de transformation du coke déjà présent, ce qui permet d'effectuer la seconde étape dans des conditions douces, en particulier à une température moindre et/ou pendant une durée plus courte.

La propension du coke présent sur le catalyseur à être éliminé peut être aisément évaluée par un test de laboratoire. En particulier, la cinétique de combustion du coke présent sur le catalyseur peut être évaluée au moyen d'un test standard, consistant à déterminer le temps nécessaire pour faire baisser le taux de carbone du catalyseur à une valeur égale à 0,5% en poids, par rapport au poids total du catalyseur.

Le test consiste à placer le catalyseur usé, préalablement débarrassé des hydrocarbures libres, dans un four préchauffé par exemple à 500°C et balayé par un débit d'air, et à mesurer la vitesse de disparition du carbone en fonction du temps. Ce test peut être notamment utilisé pour prévoir et définir les conditions opératoires de l'étape de combustion du coke à l'échelle industrielle.

En particulier, le procédé selon l'invention s'est avéré conduire à une meilleure cinétique de combustion du coke.

Par rapport aux procédés de régénération de l'art antérieur, le procédé selon la présente invention permet ainsi des économies substantielles d'énergie, et s'avère plus efficace en termes d'activité du catalyseur régénéré: la porosité (volume poreux, surface spécifique) du catalyseur ainsi que ses sites actifs sont préservés, ce qui permet un meilleur recouvrement de l'activité du catalyseur.

En outre, par rapport aux procédés de régénération de l'art antérieur, le procédé selon la présente invention s'est avéré permettre de régénérer directement des catalyseurs usés sans effectuer d'étape préalable de "stripage" du catalyseur, c'est à dire, de lavage de celui-ci au moyen d'un flux de gaz par exemple de la vapeur d'eau ou de l'azote.

En effet, les procédés classiques ne permettent pas de régénérer directement des catalyseurs fortement chargés en hydrocarbures, en raison notamment des risques d'inflammations, d'explosions. Ils nécessitent donc généralement une étape préalable de stripage du catalyseur, qui peut être réalisée in situ ou ex situ.

Ainsi, le procédé selon l'invention permet d'une part de faire l'économie de l'étape préalable de stripage, et d'autre part de récupérer facilement les hydrocarbures correspondants, pour les valoriser.

Selon un mode de réalisation préféré, les catalyseurs à régénérer au moyen du procédé selon l'invention contiennent de 1 à 40% en poids d'hydrocarbures, par rapport au poids total du catalyseur.

Les deux étapes du procédé selon l'invention peuvent être plus ou moins intégrées. La première étape peut être effectuée par exemple en mode batch avec un seul réacteur ou plusieurs réacteurs en parallèle. Dans ce dernier cas, l'intégration avec la seconde étape, qui est de préférence effectuée en mode continu, est plus facile et permet de réduire la quantité de stockage intermédiaire.

Le procédé selon la présente invention est réalisé hors site, c'est à dire en dehors de l'unité dans laquelle le catalyseur est employé. En d'autres termes, le catalyseur doit être déchargé de l'unité, avant d'être régénéré dans une ou plusieurs installations distinctes au moyen du procédé selon la présente invention.

Le procédé de régénération selon l'invention peut, outre les deux étapes décrites ci-avant, comprendre en option une ou plusieurs étapes de traitement additionnelles, effectuées avant la première étape, et/ou après la seconde étape.

Le procédé selon l'invention peut ainsi inclure une ou plusieurs étape(s) finale(s) d'activation du catalyseur, dont le but est d'activer les sites catalytiques immédiatement avant l'emploi du catalyseur.

Le procédé selon la présente invention permet de régénérer de manière efficace tout catalyseur usé employé dans le traitement et/ou la conversion d'hydrocarbures dans les domaines du raffinage pétrolier et de la pétrochimie.

Ces catalyseurs se présentent généralement sous forme de particules solides de petite taille telles que des billes, des particules plus ou moins cylindriques, des extrudés. Ils présentent une surface spécifique, mesurée par la méthode BET, généralement comprise entre 50 et 500 m²/g, de préférence entre 100 et 300 m²/g, un volume poreux, déterminé par adsorption d'azote, allant de 0,25 à 1 ml/g, et un diamètre de pores moyen, déterminé par adsorption d'azote, allant de 7 à 20 nm.

Ces catalyseurs comprennent un support poreux généralement constitué d'un ou plusieurs oxydes inorganiques réfractaires tels que les silices et/ou les alumines, les zéolithes, sur lequel peuvent être déposés un ou plusieurs métaux catalytiquement actifs, choisis par exemple parmi les métaux des groupes VIII et VIB de la classification périodique des éléments.

Le procédé selon l'invention s'est ainsi avéré particulièrement efficace pour la régénération de catalyseurs d'hydrotraitement et/ou d'hydroconversion d'hydrocarbures. Par les termes hydrotraitement et d'hydroconversion d'hydrocarbures, on désigne de manière connue en soi des traitements réalisés en présence d'hydrogène, et qui sont destinés à modifier la structure des molécules d'hydrocarbures et/ou à éliminer des mélanges d'hydrocarbures des composés indésirables tels que notamment les composés soufrés, azotés, aromatiques, métalliques. Peuvent être cités, à titre d'exemples non limitatifs, les procédés d'hydrocraquage, de réformage, d'hydrogénation, et les procédés dits d'hydrotraitement tels que les procédés d'hydrodésulfuration, d'hydrodéazotation, d'hydrodéaromatisation, d'hydrodémétallation.

Les catalyseurs employés dans ces procédés contiennent au moins un métal du groupe VIII de la classification périodique des éléments, tel que par exemple le cobalt, le nickel, le fer, le platine, le palladium, associé à au moins un métal du groupe VIB tels que par exemple le molybdène, le tungstène, le chrome. La teneur en métal ou métaux du groupe VIII est généralement comprise entre 0,1 et 10% en poids par rapport au poids total du catalyseur, et la teneur en métal ou métaux du groupe VIB est généralement comprise entre 1 et 20% en poids par rapport au poids total du catalyseur.

Ces métaux sont déposés sur un support à base d'un ou plusieurs oxydes minéraux réfractaires tels que notamment les alumines, les silices, les silice-alumines, les zéolithes, les zircones, les oxydes de titane et de bore, et les mélanges de tels oxydes.

En particulier, le procédé selon l'invention est particulièrement approprié pour la régénération de catalyseurs contenant les associations métalliques CoMo, NiMo, NiW, NiCoMo, déposées sur des supports à base d'alumine.

Le procédé selon l'invention s'est également avéré particulièrement efficace pour la régénération de catalyseurs à base de zéolithes.

Les exemples qui suivent sont donnés à titre purement illustratif de la présente invention.

### EXEMPLES

### Caractérisation des catalyseurs:

Dans les exemples qui suivent, la propension du coke présent sur le catalyseur à être éliminé a été déterminée au moyen du test suivant, qui permet de déterminer la cinétique de combustion du coke à 500°C:
Un échantillon de catalyseur usé est placé dans 4 coupelles métalliques (250 mg de catalyseur dans chaque coupelle), lesquelles sont elles même placées dans un four ventilé, chauffé à 500°C. Le flux d'air est élevé, bien au-delà de la stoechiométrie requise par la réaction d'oxydation, de façon à ce que la combustion s'effectue à une pression partielle d'oxygène constante.

Les coupelles sont retirées une par une du four à des intervalles de temps réguliers, et la teneur en carbone résiduel de l'échantillon de catalyseur est déterminée. L'on établit ainsi la courbe représentant l'évolution de la teneur en carbone résiduel du catalyseur au cours du temps, ce qui permet de déterminer le temps nécessaire pour atteindre une teneur en carbone de 0,5% en poids.

Ce temps, exprimé en minutes, est dénommé ci-après "régétest".

Dans les exemples ci-après, le régétest permet d'une part de déterminer la cinétique de combustion du coke sur les échantillons de catalyseur et, d'autre part, constitue la deuxième étape de combustion du coke présent sur ces mêmes échantillons.

Dans les exemples ci-après, les teneurs en carbone et en soufre des catalyseurs ont été déterminées au moyen d'un analyseur de marque "LECO", et les surfaces spécifiques ont été déterminées au moyen de la méthode BET.

Les teneurs en hydrocarbures libres des catalyseurs ont été évaluées d'après la variation de poids d'un échantillon soumis à une extraction au toluène en soxhlet suivi de séchage à l'étuve à 140°C. La limite inférieure de détection de cette méthode est de 0,3% en poids.

### Exemple 1 (comparatif):

Cet exemple a été réalisé à partir d'un catalyseur d'hydrotraitement commercial usé à base de cobalt et de molybdène sur support d'alumine, contenant 19,3 % en poids d'hydrocarbures, 25,6 % en poids de carbone, et 11,4% en poids de soufre.

Ce catalyseur a été soumis à une première étape d'extraction des hydrocarbures et composés volatiles sous gaz inerte, de la manière suivante: 100 g de ce catalyseur ont été placés dans un four tubulaire à température ambiante, et chauffés à 450°C sous un flux d'azote de 30 Nl/h, en observant une montée en température de 10°C / min, puis un pallier à 450°C de 3 heures.

A l'issue de cette première étape, le catalyseur a été analysé: il contient moins de 0,3 % en poids d'hydrocarbures libres, 11,9 % en poids de carbone, et 12,4% en poids de soufre.

Le "régétest" conduit à un temps de 29 minutes.

Le catalyseur régénéré ainsi obtenu présente une teneur en carbone de 0,1 % en poids, une teneur en soufre de 0,4% en poids, et une surface spécifique de 188 m²/g.

### Exemple 2 (exemple de référence avec utilisation d'un fluide supercritique qui n'est pas selon l'invention).

Cet exemple a été réalisé à partir du même catalyseur commercial usé que celui employé dans l'exemple 1.

Ce catalyseur a été soumis à une première étape d'extraction des hydrocarbures et composés volatiles par balayage du catalyseur au moyen de dioxyde de carbone (CO₂) à l'état supercritique, de la manière suivante :
Le dioxyde de carbone est porté au dessus de sa température critique (31°C) et de sa pression critique (74.10⁵ Pa).

100g de catalyseur usés sont placés dans une coupelle perméable métallique placée dans dispositif d'extraction, balayé par le CO₂ supercritique avec un débit de 200 kg / h, à une température de 80°C et une pression de 10 MPa (10.10⁶ Pa) et pendant une durée d'extraction de 3 heures.

Les hydrocarbures, dissous et entraînés par le flux de CO₂ supercritique, sont collectés dans un réceptacle distinct, dans lequel la pression du CO₂ est abaissée de manière à le faire passer à l'état gazeux.

A l'issue de cette première étape, le catalyseur est analysé: il contient moins de 0,3 % en poids d'hydrocarbures libres, 11,1 % en poids de carbone, et 12,4% en poids de soufre.

Le "régétest" conduit à un temps de 17 minutes.

Le catalyseur régénéré ainsi obtenu présente une teneur en carbone de 0,1 % en poids, une teneur en soufre de 0,4% en poids, et une surface spécifique de 190 m²/g.

### Exemple 3 (comparatif)

Cet exemple a été réalisé à partir d'un catalyseur commercial usé employé en pétrochimie, à base de zéolithe, et contenant 5,2% en poids d'hydrocarbures, et 10,2 % en poids de carbone.

100g de ce catalyseur ont été soumis à une première étape d'extraction des hydrocarbures et composés volatiles sous gaz inerte, cette étape étant réalisée d'une manière strictement identique à celle décrite dans l'exemple 1.

A l'issue de cette première étape, le catalyseur a été analysé: il contient moins de 0,3 % en poids d'hydrocarbures libres, et 9,4 % en poids de carbone.

Le "régétest" conduit à un temps de 82 minutes.

Le catalyseur régénéré ainsi obtenu présente une teneur en carbone de 0,1 % en poids, et une surface spécifique de 295 m²/g.

### Exemple 4 (exemple de référence avec utilisation d'un fluide supercritique qui n'est pas selon l'invention).

Cet exemple a été réalisé à partir du même catalyseur commercial usé que celui employé dans l'exemple 3.

100 g de ce catalyseur ont été soumis à une première étape d'extraction des hydrocarbures et composés volatiles par balayage du catalyseur au moyen de dioxyde de carbone (CO₂) à l'état supercritique, d'une manière strictement identique à celle décrite dans l'exemple 2.

A l'issue de cette première étape, le catalyseur est analysé: il contient moins de 0,3 % en poids d'hydrocarbures libres, et 9,1 % en poids de carbone.

Le "régétest" conduit à un temps de 65 minutes.

Le catalyseur régénéré ainsi obtenu présente une teneur en carbone de 0,1 % en poids, et une surface spécifique de 299 m²/g.

### Exemple 5 (comparatif)

Cet exemple a été réalisé à partir d'un catalyseur d'hydrotraitement de résidus commercial semi-frais, à base de nickel et de molybdène sur support d'alumine.

Ce catalyseur a été chargé neuf dans une unité industrielle, et après mise en contact avec la charge, s'est avéré présenter dès le début une efficacité insuffisante. Ce catalyseur, imprégné de gasoil, a donc été déchargé de l'unité, pour être régénéré.

Il contient 39,4 % en poids d'hydrocarbures, et 35 % en poids de carbone.

100g de ce catalyseur ont été soumis à une première étape d'extraction des hydrocarbures et composés volatiles sous gaz inerte, cette étape étant réalisée d'une manière strictement identique à celle décrite dans l'exemple 1.

A l'issue de cette première étape, le catalyseur a été analysé: il contient moins de 0,3 % en poids d'hydrocarbures libres, et 5,5 % en poids de carbone.

Le "régétest" conduit à un temps de 12 minutes.

Le catalyseur régénéré ainsi obtenu présente une teneur en carbone de 0,1 % en poids, et une surface spécifique de 170 m²/g.

### Exemple 6 (exemple de référence avec utilisation d'un fluide supercritique qui n'est pas selon l'invention).

Cet exemple a été réalisé à partir du même catalyseur commercial semi-frais que celui employé dans l'exemple 5.

100 g de ce catalyseur ont été soumis à une première étape d'extraction des hydrocarbures et composés volatiles par balayage du catalyseur au moyen de dioxyde de carbone (CO₂) à l'état supercritique, d'une manière strictement identique à celle décrite dans l'exemple 2.

A l'issue de cette première étape, le catalyseur est analysé : il contient moins de 0,3 % en poids d'hydrocarbures libres, et 1,5 % en poids de carbone.

Le "régétest" conduit à un temps de 4 minutes.

Le catalyseur régénéré ainsi obtenu présente une teneur en carbone de 0,1 % en poids, et une surface spécifique de 172 m²/g.

Les résultats obtenus dans les exemples 1 à 6 ci-avant sont rassemblés dans le tableau ci-dessous :

| Ex. | Catalyseur | Etape 1 | % en poids d'hydrocarbures libres après la 1^{ère} étape | % en poids de carbone après la 1^{ère} étape | Régétest (min) | Surface spécifique à l'issue de la régénération (m²/g) |
|---|---|---|---|---|---|---|
| 1 | CoMo sur alumine, usé | Evaporation sous azote | <0,3 | 11,9 | 29 | 188 |
| 2 | CoMo sur alumine, usé | Lavage par CO₂ supercritique | <0,3 | 11,1 | 17 | 190 |
| 3 | Zéolithe, usé | Evaporation sous azote | <0,3 | 9,4 | 82 | 295 |
| 4 | Zéolithe, usé | Lavage par CO₂ supercritique | <0,3 | 9,1 | 65 | 299 |
| 5 | NiMo sur alumine, semi frais | Evaporation sous azote | <0,3 | 5,5 | 12 | 170 |
| 6 | NiMo sur alumine, semi frais | Lavage par CO₂ supercritique | <0,3 | 1,5 | 4 | 172 |

Les résultats ci-dessus démontrent que le procédé selon les exemples 2, 4 et 6 permet d'effectuer l'étape de combustion du coke dans des conditions sensiblement plus douces, c'est à dire pendant des durées notablement raccourcies.

Il est également possible d'utiliser ce gain pour effectuer la combustion du coke pendant une durée identique à celle des procédés comparatifs, mais à une température inférieure.

Ces avantages permettent, outre un gain notable d'énergie, une meilleure restauration de l'activité du catalyseur.

## Revendications

1. Procédé de régénération hors site d'un catalyseur solide, comprenant les deux étapes consécutives suivantes :
- une première étape de lavage du catalyseur au moyen d'un ou plusieurs fluide(s) à l'état supercritique, de manière à extraire du catalyseur au moins une partie des hydrocarbures présents à la surface de celui-ci, suivie de
- une seconde étape de combustion d'au moins une partie du coke présent à la surface du catalyseur, par traitement thermique de celui-ci en présence d'oxygène et à une température allant de 300°C à 600°C, **caractérisé en ce que** le fluide à l'état supercritique est choisi parmi l'eau et le dioxyde de carbone contenant de 1 à 15 % en poids d'eau.

2. Procédé selon la revendication 1, **caractérisé en ce que** la première étape est effectuée à une température supérieure ou égale à 31°C, et à une pression supérieure ou égale à 7,38 MPa.

3. Procédé selon l'une des revendications 1 ou 2, **caractérisé en ce que** la première étape est effectuée à une température allant de 35 à 250 °C, et de préférence de 50 à 100°C.

4. Procédé selon l'une quelconque des revendications 1 à 3, **caractérisé en ce que** la première étape est effectuée à une pression allant de 7,5 à 60 MPa, et de préférence de 8 à 40 MPa, et plus préférentiellement de 8 à 20 MPa.

5. Procédé selon la revendication 1, **caractérisé en ce que** le fluide à l'état supercritique est l'eau, et **en ce que** la première étape est effectuée à une température supérieure ou égale à 374°C, et à une pression supérieure ou égale à 22,1 MPa.

6. Procédé selon l'une quelconque des revendications précédentes, **caractérisé en ce que** le fluide à l'état supercritique est employé pur, ou en mélange avec un ou plusieurs co-solvant(s) et/ou additif(s), afin de faire varier son pouvoir d'extraction des hydrocarbures.

7. Procédé selon l'une quelconque des revendications précédentes, **caractérisé en ce que** la première étape est effectuée en faisant circuler une quantité de fluide à l'état supercritique, exprimée comme le rapport du débit horaire pondéral du fluide à l'état supercritique par au poids de catalyseur, comprise entre 10 et 3000 h⁻¹, et de préférence entre 100 et 1000 h⁻¹.

8. Procédé selon l'une quelconque des revendications précédentes, **caractérisé en ce que** la seconde étape est effectuée, en totalité ou en partie, à une température allant de 350°C à 550°C.

9. Procédé selon l'une quelconque des revendications précédentes, **caractérisé en ce que** la seconde étape est poursuivie jusqu'à l'obtention d'une teneur en carbone du catalyseur inférieure ou égale à 2 % en poids, de préférence inférieure ou égale à 1 % en poids, et plus préférentiellement inférieure ou égale à 0,5% en poids, par rapport au poids total du catalyseur.

10. Procédé selon l'une quelconque des revendications précédentes, **caractérisé en ce qu'**il ne comprend pas d'étape préalable de "stripage" du catalyseur, c'est à dire, de lavage de celui-ci au moyen d'un flux de gaz, par exemple de la vapeur d'eau ou de l'azote.

11. Procédé selon l'une quelconque des revendications précédentes, **caractérisé en ce que** le catalyseur à régénérer contient de 1 à 40% en poids d'hydrocarbures, par rapport au poids total du catalyseur.

12. Procédé selon l'une quelconque des revendications précédentes, **caractérisé en ce que** le catalyseur est un catalyseur de traitement et/ou de conversion d'hydrocarbures, et de préférence un catalyseur d'hydrotraitement et/ou d'hydroconversion d'hydrocarbures.

## Patentansprüche

1. Verfahren zur Off-Site-Regeneration eines festen Katalysators mit den folgenden zwei aufeinanderfolgenden Schritten:
- einem ersten Schritt des Waschens des Katalysators mit einem oder mehreren Fluiden in überkritischem Zustand zur Extraktion mindestens eines Teils der an der Oberfläche des Katalysators vorliegenden Kohlenwasserstoffe aus dem Katalysator, gefolgt von
- einem zweiten Schritt des Verbrennens mindestens eines Teils des an der Oberfläche des Katalysators vorliegenden Kokses durch Wärmebehandlung des Katalysators in Gegenwart von Sauerstoff und bei einer Temperatur im Bereich von 300°C bis 600°C, **dadurch gekennzeichnet, dass** das Fluid in überkritischem Zustand aus Wasser und Kohlendioxid mit 1 bis 15 Gew.-% Wasser ausgewählt wird.

2. Verfahren nach Anspruch 1, **dadurch gekennzeichnet, dass** der erste Schritt bei einer Temperatur größer oder gleich 31 °C und einem Druck größer oder gleich 7,38 MPa durchgeführt wird.

3. Verfahren nach Anspruch 1 oder 2, **dadurch gekennzeichnet, dass** der erste Schritt bei einer Temperatur im Bereich von 35 bis 250°C und vorzugsweise von 50 bis 100°C durchgeführt wird.

4. Verfahren nach einem der Ansprüche 1 bis 3, **dadurch gekennzeichnet, dass** der erste Schritt bei einem Druck im Bereich von 7,5 bis 60 MPa und vorzugsweise von 8 bis 40 MPa und weiter bevorzugt von 8 bis 20 MPa durchgeführt wird.

5. Verfahren nach Anspruch 1, **dadurch gekennzeichnet, dass** es sich bei dem Fluid in überkritischem Zustand um Wasser handelt und dass der erste Schritt bei einer Temperatur größer oder gleich 374°C und einem Druck größer oder gleich 22,1 MPa durchgeführt wird.

6. Verfahren nach einem der vorhergehenden Ansprüche, **dadurch gekennzeichnet, dass** das Fluid in überkritischem Zustand rein oder als Mischung mit einem oder mehreren Cosolventien und/oder Additiven zur Variation seines Extraktionsvermögens für die Kohlenwasserstoffe eingesetzt wird.

7. Verfahren nach einem der vorhergehenden Ansprüche, **dadurch gekennzeichnet, dass** der erste Schritt durchgeführt wird, indem eine Menge von Fluid in überkritischem Zustand, ausgedrückt als das Verhältnis der gewichtsbezogenen Raumgeschwindigkeit des Fluids in überkritischem Zustand zu dem Gewicht des Katalysators, zwischen 10 und 3000 h⁻¹ und vorzugsweise zwischen 100 und 1000 h⁻¹, umgewälzt wird.

8. Verfahren nach einem der vorhergehenden Ansprüche, **dadurch gekennzeichnet, dass** der zweite Schritt ganz oder teilweise bei einer Temperatur im Bereich von 350°C bis 550°C durchgeführt wird.

9. Verfahren nach einem der vorhergehenden Ansprüche, **dadurch gekennzeichnet, dass** der zweite Schritt bis zum Erhalt eines Kohlenstoffgehalts des Katalysators kleiner oder gleich 2 Gew.-%, vorzugsweise kleiner oder gleich 1 Gew.-% und weiter bevorzugt kleiner oder gleich 0,5 Gew.-%, bezogen auf das Gesamtgewicht des Katalysators, fortgesetzt wird.

10. Verfahren nach einem der vorhergehenden Ansprüche, **dadurch gekennzeichnet, dass** es keinen vorherigen Schritt des "Strippens" des Katalysators, d.h. des Waschens des Katalysators mit einem Gasstrom, beispielsweise einem Wasserdampf- oder Stickstoffstrom, umfasst.

11. Verfahren nach einem der vorhergehenden Ansprüche, **dadurch gekennzeichnet, dass** der zu regenerierende Katalysator 1 bis 40 Gew.-% Kohlenwasserstoffe, bezogen auf das Gesamtgewicht des Katalysators, enthält.

12. Verfahren nach einem der vorhergehenden Ansprüche, **dadurch gekennzeichnet, dass** es sich bei dem Katalysator um einen Katalysator zur Behandlung und/oder Umwandlung von Kohlenwasserstoffen und vorzugsweise einen Katalysator zum Hydrotreating und/oder zur Hydrokonversion von Kohlenwasserstoffen handelt.

## Claims

1. Process for the off site regeneration of a solid catalyst, comprising the following two consecutive stages:
- a first stage of washing the catalyst using one or more fluid (s) in the supercritical state, so as to extract from the catalyst at least a portion of the hydrocarbons present at the surface of the latter, followed by
- a second stage of combustion of at least a portion of the coke present at the surface of the catalyst by a heat treatment of the latter in the presence of oxygen and at a temperature ranging from 300°C to 600°C, **characterized in that** the fluid in the supercritical state is chosen from water and carbon dioxide comprising from 1 to 15% by weight of water.

2. Process according to Claim 1, **characterized in that** the first stage is carried out at a temperature of greater than or equal to 31°C and at a pressure of greater than or equal to 7.38 MPa.

3. Process according to either of Claims 1 and 2, **characterized in that** the first stage is carried out at a temperature ranging from 35 to 250°C and preferably from 50 to 100°C.

4. Process according to any one of Claims 1 to 3, **characterized in that** the first stage is carried out at a pressure ranging from 7.5 to 60 MPa, preferably from 8 to 40 MPa and more preferably from 8 to 20 MPa.

5. Process according to Claim 1, **characterized in that** the fluid in the supercritical state is water and **in that** the first stage is carried out at a temperature of greater than or equal to 374°C and at a pressure of greater than or equal to 22.1 MPa.

6. Process according to any one of the preceding claims, **characterized in that** the fluid in the supercritical state is employed pure or as a mixture with one or more cosolvent(s) and/or additive(s), in order to vary its power to extract hydrocarbons.

7. Process according to any one of the preceding claims, **characterized in that** the first stage is carried out by circulating an amount of fluid in the supercritical state, expressed as the ratio of the hourly flow rate by weight of the fluid in the supercritical state to the weight of catalyst, of between 10 and 3000 h⁻¹ and preferably between 100 and 1000 h⁻¹.

8. Process according to any one of the preceding claims, **characterized in that** the second stage is carried out, in all or in part, at a temperature ranging from 350°C to 550°C.

9. Process according to any one of the preceding claims, **characterized in that** the second stage is continued until a carbon content of the catalyst of less than or equal to 2% by weight, preferably of less than or equal to 1% by weight and more preferably of less than or equal to 0.5% by weight, with respect to the total weight of the catalyst, is obtained.

10. Process according to any one of the preceding claims, **characterized in that** it does not comprise a preliminary stage of stripping the catalyst, that is to say of washing the latter using a stream of gas, for example steam or nitrogen.

11. Process according to any one of the preceding claims, **characterized in that** the catalyst to be regenerated comprises from 1 to 40% by weight of hydrocarbons, with respect to the total weight of the catalyst.

12. Process according to any one of the preceding claims, **characterized in that** the catalyst is a catalyst for the treatment and/or conversion of hydrocarbons and preferably a catalyst for the hydrotreating and/or hydroconversion of hydrocarbons.
